# EUROPEAN PATENT APPLICATION

(11) **EP 4 495 902 A1**
(43) Date of publication of application: **22.01.2025**
(21) Application number: 23185905.9
(22) Date of filing: 17.07.2023
(51) Int. Cl.: G07C 9/00

(54) **ACCESS SYSTEM AND METHOD OF OPERATING THE SAME**

(71) Applicant: NXP B.V., 5656 AG Eindhoven (NL)
(72) Inventor: Haslinger, Dorian, 5656AG Eindhoven (NL); Manninger, Marc, 5656AG Eindhoven (NL); Khullar, Naman, 5656AG Eindhoven (NL)
(74) Representative: Krott, Michel

(57) **Abstract**

In accordance with a first aspect of the present disclosure, an access system is provided for gaining access to a vehicle, comprising: a communication unit configured to establish a communication channel with an external device and to receive at least one credential from the external device through said communication channel; a secure element configured to perform a verification of said credential and to grant or deny access to the vehicle in dependence on a result of the verification of the credential. In accordance with further aspects of the present disclosure, a corresponding method of operating an access system for gaining access to a vehicle is conceived, as well as a computer program for carrying out said method.

## Description

### TECHNICAL FIELD

The present disclosure relates to an access system for gaining access to a vehicle. Furthermore, the present disclosure relates to a corresponding method of operating an access system for gaining access to a vehicle.

### BACKGROUND

An access system for a vehicle may authenticate devices which are used to gain access to said vehicle, before it grants the access (for example, before it unlocks the vehicle). This authentication is typically performed by a secure element, which verifies the credentials provided by said devices. Another component of the access system, such as a general-purpose processor (e.g., a microcontroller), then typically takes a decision to grant access to the vehicle or not, based on a result of the verification performed by the secure element.

### SUMMARY

In accordance with a first aspect of the present disclosure, an access system is provided for gaining access to a vehicle, comprising: a communication unit configured to establish a communication channel with an external device and to receive at least one credential from the external device through said communication channel; a secure element configured to perform a verification of said credential and to grant or deny access to the vehicle in dependence on a result of the verification of the credential.

In one or more embodiments, the secure element is further configured to transmit, upon or after a positive verification of the credential, a message to a controller comprised in the vehicle, wherein said message contains an instruction to unlock the vehicle.

In one or more embodiments, the message is a controller area network (CAN) message.

In one or more embodiments, the communication unit is a near field communication (NFC) unit.

In one or more embodiments, the credential is an application identifier (AID) transmitted by the external device.

In one or more embodiments, the communication unit is a Bluetooth low energy (BLE) communication unit.

In one or more embodiments, the access system comprises a further communication unit which is configured to perform one or more ultra-wideband (UWB) ranging operations with the external device.

In one or more embodiments, the secure element is further configured to grant or deny access to the vehicle in dependence on the result of the verification of the credential and in dependence on a result of the ranging operations performed by the further communication unit.

In one or more embodiments, the credential has been received in response to a BLE advertising message transmitted by the BLE communication unit.

In one or more embodiments, a vehicle comprises an access system of the kind set forth.

In accordance with a second aspect of the present disclosure, a method of operating an access system for gaining access to a vehicle is conceived, the method comprising: establishing, by a communication unit included in the access system, a communication channel with an external device and receiving at least one credential from the external device through said communication channel; performing, by a secure element included in the access system, a verification of said credential and granting or denying access to the vehicle in dependence on a result of the verification of the credential.

In one or more embodiments, the secure element transmits, upon or after a positive verification of the credential, a message to a controller comprised in the vehicle, wherein said message contains an instruction to unlock the vehicle.

In one or more embodiments, the message is a controller area network (CAN) message.

In accordance with a third aspect of the present disclosure, a computer program is provided, comprising executable instructions which, when executed by a secure element comprised in an access system for gaining access to a vehicle, cause said secure element to perform a verification of a credential received from an external device and to grant or deny access to the vehicle in dependence on a result of the verification of the credential.

### DESCRIPTION OF DRAWINGS

Embodiments will be described in more detail with reference to the appended drawings.
Fig. 1 shows an illustrative embodiment of an access system.
Fig. 2 shows an illustrative embodiment of a method of operating an access system.
Fig. 3 shows an example of an access system.
Fig. 4 shows another illustrative embodiment of an access system.
Fig. 5 shows another example of an access system.
Fig. 6 shows a further illustrative embodiment of an access system.
Fig. 7 shows an example of a method of operating a vehicle access system.
Fig. 8 shows an illustrative embodiment of a method of operating a vehicle access system.
Fig. 9 shows another example of a method of operating a vehicle access system.
Fig. 10 shows another illustrative embodiment of a method of operating a vehicle access system.

### DESCRIPTION OF EMBODIMENTS

In secure access systems, specifically systems for gaining access to a vehicle, the decision to grant or deny access is typically taken by a general-purpose processor (e.g., a microcontroller), which interacts with a secure element. It is noted that a secure element may be defined as a tamper-resistant integrated circuit with installed or preinstalled applications, which have a prescribed functionality and a prescribed level of security. Furthermore, a secure element may implement security functions, such as cryptographic functions and authentication functions. The secure element may verify credentials provided by an access device. Depending on the result of the verification, the general-purpose processor may then take the decision to grant or deny access to the vehicle. The general-purpose processor is less secure than the secure element, because the latter is typically a certified device which has to meet strict security requirements. However, the secure element is typically only added as a dedicated "security companion" device, acting as a peripheral or client node only. This opens a back door for attackers, because the actual decision operation (e.g., opening a door, starting an engine) can still be manipulated in the unsecure operation environment (i.e., the less secure general-purpose processor). Furthermore, it increases the system complexity, among others due to additional redundancy checks. More specifically, in a system containing both a secure element and a microcontroller, a message will typically be sent from the microcontroller to the secure element and vice versa. On both devices a redundancy check of the messages is performed, typically via a cyclic redundancy check (CRC). Furthermore, secure integrity checks or similar mechanisms will typically have to be implemented.

Now discussed are an access system for gaining access to a vehicle, as well as a corresponding method of operating an access system for gaining access to a vehicle, which facilitate increasing the resistance against attacks on the system.

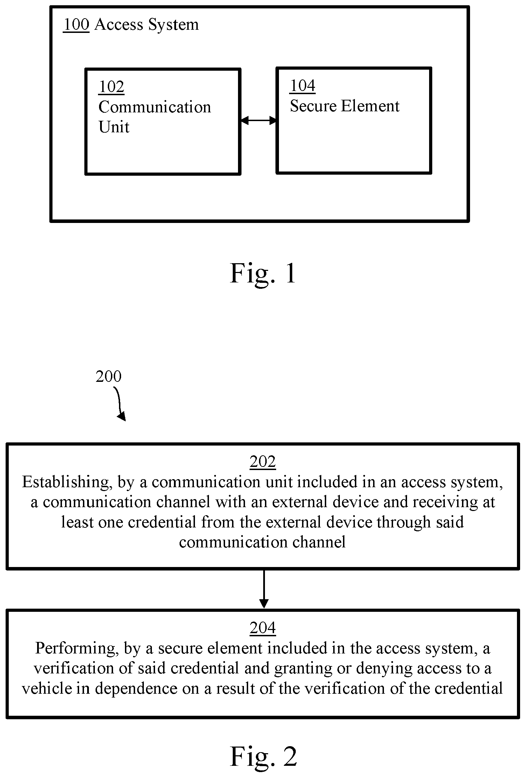

**Fig. 1** shows an illustrative embodiment of an access system 100. The access system 100 comprises a communication unit 102 and a secure element 104 which are operatively coupled to each other. The communication unit 102 is configured to establish a communication channel with an external device (not shown) and to receive at least one credential from the external device through said communication channel. In particular, the external device may be an access device of the kind set forth above. Furthermore, the secure element 104 is configured to perform a verification of said credential and to grant or deny access to the vehicle in dependence on a result of the verification of the credential. Since the secure element 104 performs the verification and also takes the decision to grant or deny access to the vehicle, the resistance against attacks on the access system may be increased. Furthermore, the complexity of the access system may be reduced. It is noted that granting access to the vehicle may include, in addition to unlocking the vehicle, granting access to components embedded within the vehicle (such as the engine or a communication system) or to functions performed by the vehicle or by one or more of its components (such as connectivity functions or infotainment functions).

In one or more embodiments, the secure element is further configured to transmit, upon or after a positive verification of the credential, a message to a controller comprised in the vehicle, wherein said message contains an instruction to unlock the vehicle. In this way, the vehicle may be unlocked in an easy, yet secure manner. In a practical implementation, the message is a controller area network (CAN) message. In this way, the access system may easily be integrated into existing vehicle control systems based on a CAN.

In one or more embodiments, the communication unit is a near field communication (NFC) unit. In this way, an increased level of security may be provided in NFC-based vehicle access systems. In a practical implementation, the credential is an application identifier (AID) transmitted by the external device.

In one or more embodiments, the communication unit is a Bluetooth low energy (BLE) communication unit. In this way, an increased level of security may be provided in BLE-based vehicle access systems. In one or more embodiments, the access system comprises a further communication unit which is configured to perform one or more ultra-wideband (UWB) ranging operations with the external device. In this way, the security level may be further increased, in particular by verifying whether a position of the external device matches an expected position. In one or more embodiments, the secure element is further configured to grant or deny access to the vehicle in dependence on the result of the verification of the credential and in dependence on a result of the ranging operations performed by the further communication unit. Thereby, the security level may be further increased, because the decision to grant or deny access is based on two criteria and is taken in a secure environment. In a practical implementation, the credential has been received in response to a BLE advertising message transmitted by the BLE communication unit.

**Fig. 2** shows an illustrative embodiment of a method 200 of operating an access system. The method 200 comprises the following steps. At 202, a communication unit included in the access system establishes a communication channel with an external device and receives at least one credential from the external device through said communication channel. Furthermore, at 204, a secure element included in the access system performs a verification of said credential and grants or denies access to a vehicle in dependence on a result of the verification of the credential. As mentioned above, since the secure element performs the verification and also takes the decision to grant or deny access to the vehicle, the resistance against attacks on the access system may be increased. Furthermore, the complexity of the access system may be reduced.

The presently disclosed access system and corresponding operating method facilitate increasing the level of security, because the decision to grant or deny access may be taken in a secure environment. Furthermore, they facilitate reducing the system complexity. For example, no additional redundancy checks may be needed. More specifically, compared to a typical system containing both a secure element and a microcontroller, less overhead may be required and only a message within the secure environment itself may need to be checked. Furthermore, in case the access system includes a plurality of so-called anchors, no enhanced security protocol between those anchors may be needed. Furthermore, the complexity of the integrated circuits used for the communication (e.g. NFC, BLE, UWB) may be reduced, because they may need less security features. In addition, such integrated circuits having less security features may be cheaper. Furthermore, a reduced end-to-end latency may be achieved, because it may no longer be necessary to forward data from a general-purpose processor to a separate secure element. Finally, the user experience may be improved due to a faster communication and a consequential faster opening of the door and start of the engine.

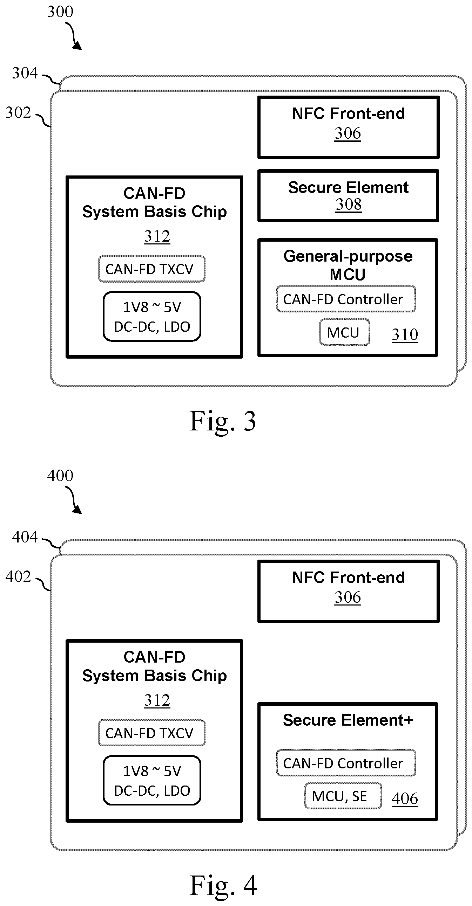

**Fig. 3** shows an example of an access system 300. The access system 300 comprises a plurality of anchors 302, 304. The anchor 302 contains an NFC front-end 306, a secure element 308, a general-purpose microcontroller 310 and a CAN flexible-data rate (CAN-FD) system basis chip 312. The anchor 304 may contain the same or similar components as the anchor 302. In particular, Fig. 3 shows a typical NFC-based system for accessing a vehicle, as propagated by the Car Connectivity Consortium (CCC). In a typical car access use case, a mobile phone (not shown) may be connected via the NFC front-end 306 of an outside anchor 302 (e.g., placed in a door handle). The NFC front-end 306 is connected to the general-purpose microcontroller 310. The outside anchor 302 may perform a so-called NFC low-power card detection (LPCD) process. In case a device (e.g., the mobile phone) is detected by the outside anchor 302, the outside anchor 302 retrieves an application identifier (AID) through the NFC front-end 306. If the AID is a valid AID, then the outside anchor 302 may connect to the secure element 308, which may be placed in the outside anchor (as shown in Fig. 3) or be part of a different module. The secure element 308 is also connected to the general-purpose microcontroller 310. In this use case, data exchanges are performed between the NFC front-end 206 and the general-purpose microcontroller 310, as well as between the general-purpose microcontroller 310 and the secure element 308. If the authentication performed by the secure element 308 is successful, the microcontroller 310 may receive a notification from the secure element 308 and may send out a CAN message to unlock the car. In this scenario, the decision to grant or deny access to the car is taken in a relatively unsecure environment. Thus, an attacker will focus on attacking the less secure microcontroller 310 instead of the secure element 308, and he will need less resources for the attack.

**Fig. 4** shows another illustrative embodiment of an access system 400. The access system 400 comprises a plurality of anchors 402, 404. Similar to the system shown in Fig. 3, the anchor 402 contains an NFC front-end 306 and a CAN-FD system basis chip 312. In contrast with the system shown in Fig. 3, the anchor 402 contains an extended secure element 406, which includes both a general-purpose microcontroller function as well as a secure element function. The anchor 404 may contain the same or similar components as the anchor 402. In particular, Fig. 4 shows an NFC-based system for accessing a vehicle, in accordance with the present disclosure. In a use case supported by this system, a mobile phone (not shown) may be connected via the NFC front-end 306 of an outside anchor 402 (e.g., placed in a door handle). The NFC front-end 306 is connected to the extended secure element 406. The outside anchor 402 may perform a so-called NFC low-power card detection (LPCD) process. In case a device (e.g., the mobile phone) is detected by the outside anchor 402, the outside anchor 402 retrieves an application identifier (AID) through the NFC front-end 306. If the AID is a valid AID, then the outside anchor 402 will execute the car access application on the extended secure element 406. In this use case, data exchanges are performed between the NFC front-end 306 and the extended secure element 406. If the authentication performed by the extended secure element 406 is successful, the extended secure element 406 itself may send out a message (e.g. a CAN message) to unlock the car directly. Thus, in this scenario, the decision to grant or deny access to the car is taken in a more secure environment, compared to the scenario described with reference to Fig. 3.

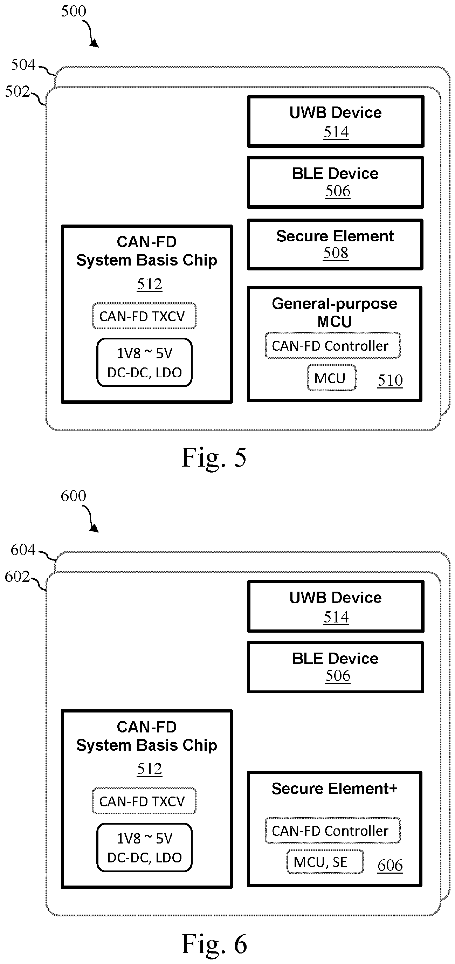

**Fig. 5** shows another example of an access system 500. The access system 500 comprises a plurality of anchors 502, 504. The anchor 502 contains a BLE device 506, a secure element 508, a general-purpose microcontroller 510, a CAN-FD system basis chip 512 and a UWB device 514. The anchor 504 may contain the same or similar components as the anchor 502. In particular, Fig. 5 shows a typical BLE/UWB-based system for accessing a vehicle, as propagated by the Car Connectivity Consortium (CCC). In a typical car access use case, a mobile phone (not shown) may be connected via the BLE device 506 of the outside anchor 502 (e.g., a shark fin). The BLE device 506 is connected to the general-purpose microcontroller 510. The outside anchor 502 may perform BLE advertising using the BLE device 506. In case a device (e.g., a known mobile phone) is detected by the outside anchor 502, the outside anchor 502 opens a channel to the secure element 508. It is noted that this channel may be established either with the secure element 508 within said anchor 502, or with another secure element (which may for example be embedded in the anchor 504). Thus, data exchanges may for example be performed between the BLE device 506 and the general-purpose microcontroller 510, between said general-purpose microcontroller 510 and another general-purpose microcontroller (e.g., of another anchor) through the CAN bus, and between said other general-purpose microcontroller and a secure element connected to it. In case the authentication is successful, the UWB device 514 may be used for a localization of the mobile phone. For this purpose, the secure element may send ranging keys to the UWB device 514. Then, if the estimated position or movement of the mobile phone matches an expected position or movement, the other general-purpose microcontroller may receive a notification from the secure element and may send out a CAN message to unlock the car. In this scenario, the decision to grant or deny access to the car is taken in a relatively unsecure environment.

**Fig. 6** shows a further illustrative embodiment of an access system 600. The access system 600 comprises a plurality of anchors 602, 604. Similar to the system shown in Fig. 5, the anchor 602 contains a BLE device 506, a CAN-FD system basis chip 512 and a UWB device 514. In contrast with the system shown in Fig. 5, the anchor 602 contains an extended secure element 606, which includes both a general-purpose microcontroller function as well as a secure element function. The anchor 604 may contain the same or similar components as the anchor 602. In particular, Fig. 6 shows a BLE/UWB-based system for accessing a vehicle, in accordance with the present disclosure. In a use case supported by this system, a mobile phone (not shown) may be connected via the BLE device 506 of the outside anchor 602 (e.g., a shark fin). The BLE device 506 is connected to the extended secure element 606. The outside anchor 602 performs BLE advertising using the BLE device 506. In case a device (e.g., a known mobile phone) is detected by the outside anchor 602, the outside anchor 602 performs a transaction. In case the authentication is successful, the UWB device 515 may be used for a localization of the mobile phone. Then, if the estimated position or movement of the mobile phone matches an expected position or movement, the extended secure element 606 may itself send out a CAN message to unlock the car. Thus, in this scenario, the decision to grant or deny access to the car is taken in a more secure environment, compared to the scenario described with reference to Fig. 5.

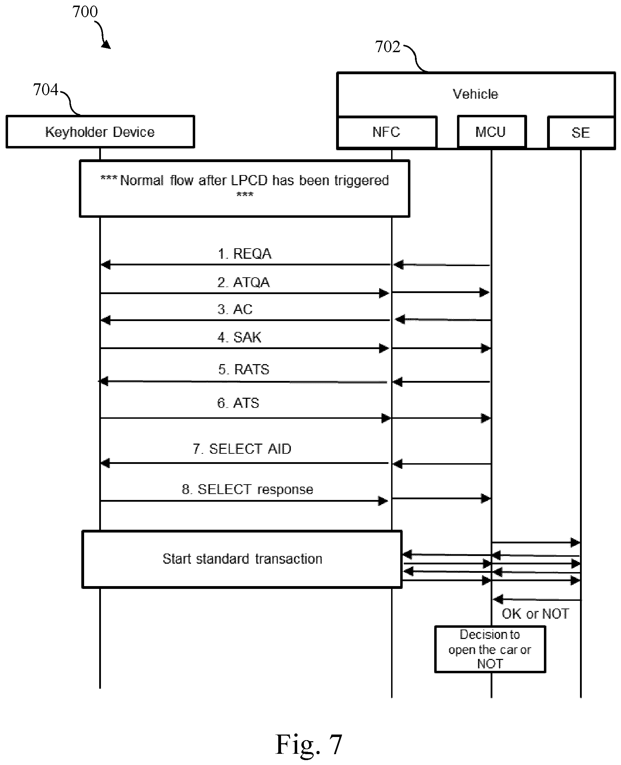

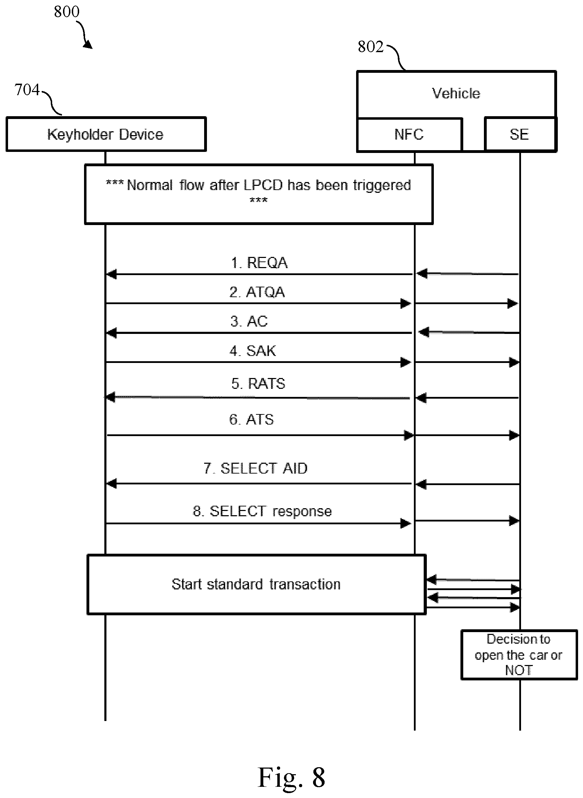

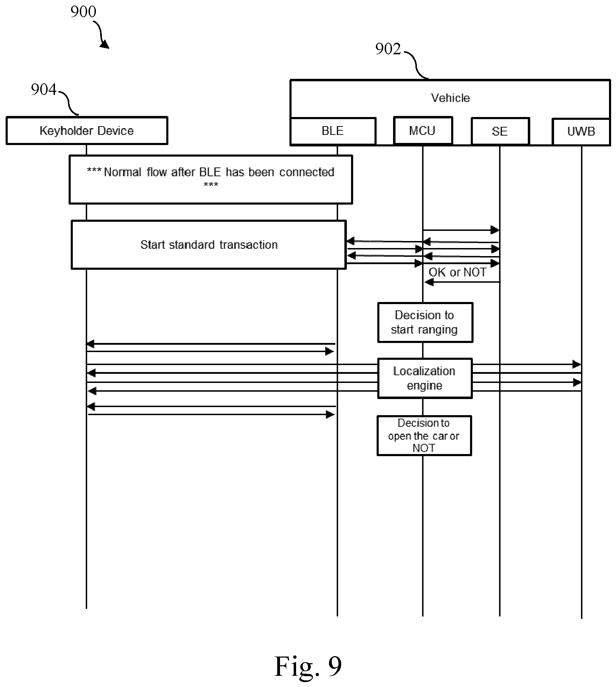

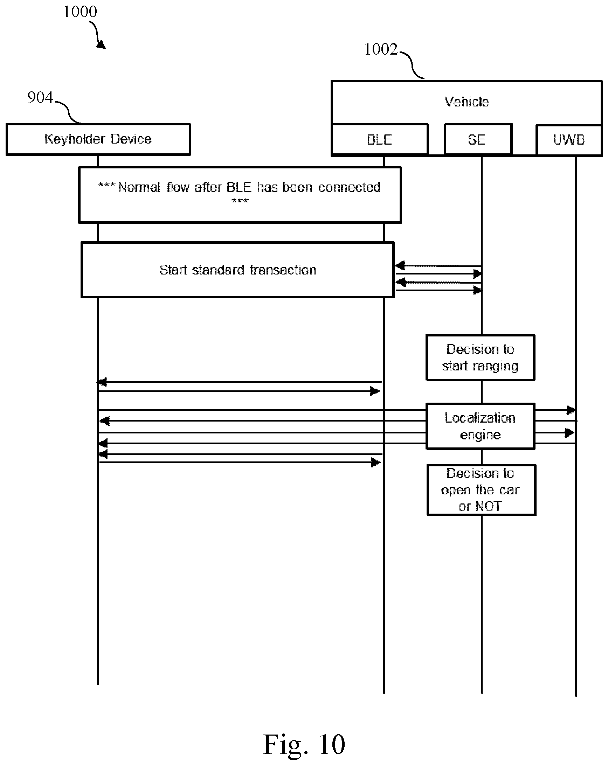

**Figs. 7 to 10** show example and illustrative embodiments of methods of operating a vehicle access system. In particular, Fig. 7 shows a method 700 of operating the system 300 shown in Fig. 3. Fig. 8 shows a method 800 of operating the system 400 shown in Fig. 4. Furthermore, Fig. 9 shows a method 900 of operating the system 500 shown in Fig. 5. Finally, Fig. 10 shows a method 1000 of operating the system 600 shown in Fig. 6.

In the NFC-based methods shown in Figs. 7 and 8, an access device (i.e., the keyholder device 704) interacts with a vehicle 702, 802 (e.g., a car) in which an access system is embedded. In a typical access system, a general-purpose microcontroller takes the decision to open the vehicle or not, as shown in Fig. 7. In contrast, in accordance with the present disclosure, this decision may be taken by a secure element, as shown in Fig. 8. It is noted that the content of the messages shown in Figs. 7 and 8 (REQA, ATQA, AC, etc.) is defined in the technical standard ISO/IEC 14443.

In the BLE/UWB-based methods shown in Figs. 9 and 10, an access device (i.e., the keyholder device 904) interacts with a vehicle 902, 1002 (e.g., a car) in which an access system is embedded. In a typical access system, a general-purpose microcontroller takes a decision to start ranging, executes a localization engine and takes a decision to open the vehicle or not, as shown in Fig. 9. In contrast, in accordance with the present disclosure, these operations may be performed by a secure element, as shown in Fig. 10.

The systems and methods described herein may at least partially be embodied by a computer program or a plurality of computer programs, which may exist in a variety of forms both active and inactive in a single computer system or across multiple computer systems. For example, they may exist as software program(s) comprised of program instructions in source code, object code, executable code or other formats for performing some of the steps. Any of the above may be embodied on a computer-readable medium, which may include storage devices and signals, in compressed or uncompressed form.

As used herein, the term "computer" refers to any electronic device comprising a processor, such as a general-purpose central processing unit (CPU), a specific-purpose processor or a microcontroller. A computer is capable of receiving data (an input), of performing a sequence of predetermined operations thereupon, and of producing thereby a result in the form of information or signals (an output). Depending on the context, the term "computer" will mean either a processor in particular or more generally a processor in association with an assemblage of interrelated elements contained within a single case or housing.

The term "processor" or "processing unit" refers to a data processing circuit that may be a microprocessor, a co-processor, a microcontroller, a microcomputer, a central processing unit, a field programmable gate array (FPGA), a programmable logic circuit, and/or any circuit that manipulates signals (analog or digital) based on operational instructions that are stored in a memory. The term "memory" refers to a storage circuit or multiple storage circuits such as read-only memory, random access memory, volatile memory, non-volatile memory, static memory, dynamic memory, Flash memory, cache memory, and/or any circuit that stores digital information.

As used herein, a "computer-readable medium" or "storage medium" may be any means that can contain, store, communicate, propagate, or transport a computer program for use by or in connection with the instruction execution system, apparatus, or device. The computer-readable medium may be, for example but not limited to, an electronic, magnetic, optical, electromagnetic, infrared, or semiconductor system, apparatus, device, or propagation medium.

It is noted that the embodiments above have been described with reference to different subject-matters. In particular, some embodiments may have been described with reference to method-type claims whereas other embodiments may have been described with reference to apparatus-type claims. However, a person skilled in the art will gather from the above that, unless otherwise indicated, in addition to any combination of features belonging to one type of subject-matter also any combination of features relating to different subject-matters, in particular a combination of features of the method-type claims and features of the apparatus-type claims, is considered to be disclosed with this document.

Furthermore, it is noted that the drawings are schematic. In different drawings, similar or identical elements are provided with the same reference signs. Furthermore, it is noted that in an effort to provide a concise description of the illustrative embodiments, implementation details which fall into the customary practice of the skilled person may not have been described. It should be appreciated that in the development of any such implementation, as in any engineering or design project, numerous implementation-specific decisions must be made in order to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill.

Finally, it is noted that the skilled person will be able to design many alternative embodiments without departing from the scope of the appended claims. In the claims, any reference sign placed between parentheses shall not be construed as limiting the claim. The word "comprise(s)" or "comprising" does not exclude the presence of elements or steps other than those listed in a claim. The word "a" or "an" preceding an element does not exclude the presence of a plurality of such elements. Measures recited in the claims may be implemented by means of hardware comprising several distinct elements and/or by means of a suitably programmed processor. In a device claim enumerating several means, several of these means may be embodied by one and the same item of hardware. The mere fact that certain measures are recited in mutually different dependent claims does not indicate that a combination of these measures cannot be used to advantage.

### LIST OF REFERENCE SIGNS

- 100: access system
- 102: communication unit
- 104: secure element
- 200: method of operating an access system
- 202: establishing, by a communication unit included in an access system, a communication channel with an external device and receiving at least one credential from the external device through said communication channel
- 204: performing, by a secure element included in the access system, a verification of said credential and granting or denying access to a vehicle in dependence on a result of the verification of the credential
- 300: access system
- 302: anchor
- 304: anchor
- 306: NFC front-end
- 308: secure element
- 310: general-purpose MCU
- 312: CAN-FD system basis chip
- 400: access system
- 402: anchor
- 404: anchor
- 406: secure element+
- 500: access system
- 502: anchor
- 504: anchor
- 506: BLE device
- 508: secure element
- 510: general-purpose MCU
- 512: CAN-FD system basis chip
- 514: UWB device
- 600: access system
- 602: anchor
- 604: anchor
- 606: secure element+
- 700: method of operating a vehicle access system
- 702: vehicle
- 704: keyholder device
- 800: method of operating a vehicle access system
- 802: vehicle
- 900: method of operating a vehicle access system
- 902: vehicle
- 904: keyholder device
- 1000: method of operating a vehicle access system
- 1002: vehicle
- 1004: keyholder device

## Claims

1. An access system for gaining access to a vehicle, comprising:
a communication unit configured to establish a communication channel with an external device and to receive at least one credential from the external device through said communication channel;
a secure element configured to perform a verification of said credential and to grant or deny access to the vehicle in dependence on a result of the verification of the credential.

2. The access system of claim 1, wherein the secure element is further configured to transmit, upon or after a positive verification of the credential, a message to a controller comprised in the vehicle, wherein said message contains an instruction to unlock the vehicle.

3. The system of claim 2, wherein the message is a controller area network, CAN, message.

4. The access system of any preceding claim, wherein the communication unit is a near field communication, NFC, unit.

5. The access system of any preceding claim, wherein the credential is an application identifier, AID, transmitted by the external device.

6. The access system of any one of claims 1 to 3, wherein the communication unit is a Bluetooth low energy, BLE, communication unit.

7. The access system of claim 6, comprising a further communication unit which is configured to perform one or more ultra-wideband, UWB, ranging operations with the external device.

8. The access system of claim 7, wherein the secure element is further configured to grant or deny access to the vehicle in dependence on the result of the verification of the credential and in dependence on a result of the ranging operations performed by the further communication unit.

9. The access system of any one of claims 6 to 8, wherein the credential has been received in response to a BLE advertising message transmitted by the BLE communication unit.

10. A vehicle comprising the access system of any preceding claim.

11. A method of operating an access system for gaining access to a vehicle, the method comprising:
establishing, by a communication unit included in the access system, a communication channel with an external device and receiving at least one credential from the external device through said communication channel;
performing, by a secure element included in the access system, a verification of said credential and granting or denying access to the vehicle in dependence on a result of the verification of the credential.

12. The method of claim 11, wherein the secure element transmits, upon or after a positive verification of the credential, a message to a controller comprised in the vehicle, wherein said message contains an instruction to unlock the vehicle.

13. The method of claim 12, wherein the message is a controller area network, CAN, message.

14. A computer program comprising executable instructions which, when executed by a secure element comprised in an access system for gaining access to a vehicle, cause said secure element to perform a verification of a credential received from an external device and to grant or deny access to the vehicle in dependence on a result of the verification of the credential.

## Amended claims

### Amended claims in accordance with Rule 137(2) EPC.

1. An access system for gaining access to a vehicle, comprising:
a communication unit configured to establish a communication channel with an external device and to receive at least one credential from the external device through said communication channel;
a secure element configured to perform a verification of said credential and to grant or deny access to the vehicle in dependence on a result of the verification of the credential;
wherein the secure element is further configured to transmit, upon or after a positive verification of the credential, a message to a controller comprised in the vehicle, wherein said message contains an instruction to unlock the vehicle.

2. The system of claim 1, wherein the message is a controller area network, CAN, message.

3. The access system of any preceding claim, wherein the communication unit is a near field communication, NFC, unit.

4. The access system of any preceding claim, wherein the credential is an application identifier, AID, transmitted by the external device.

5. The access system of claim 1 or 2, wherein the communication unit is a Bluetooth low energy, BLE, communication unit.

6. The access system of claim 5, comprising a further communication unit which is configured to perform one or more ultra-wideband, UWB, ranging operations with the external device.

7. The access system of claim 6, wherein the secure element is further configured to grant or deny access to the vehicle in dependence on the result of the verification of the credential and in dependence on a result of the ranging operations performed by the further communication unit.

8. The access system of any one of claims 5 to 7, wherein the credential has been received in response to a BLE advertising message transmitted by the BLE communication unit.

9. A vehicle comprising the access system of any preceding claim.

10. A method of operating an access system for gaining access to a vehicle, the method comprising:
establishing, by a communication unit included in the access system, a communication channel with an external device and receiving at least one credential from the external device through said communication channel;
performing, by a secure element included in the access system, a verification of said credential and granting or denying access to the vehicle in dependence on a result of the verification of the credential;
wherein the secure element transmits, upon or after a positive verification of the credential, a message to a controller comprised in the vehicle, wherein said message contains an instruction to unlock the vehicle.

11. The method of claim 10, wherein the message is a controller area network, CAN, message.

12. A computer program comprising executable instructions which, when executed by a secure element comprised in an access system for gaining access to a vehicle, cause said secure element to perform a verification of a credential received from an external device and to grant or deny access to the vehicle in dependence on a result of the verification of the credential, wherein the secure element transmits, upon or after a positive verification of the credential, a message to a controller comprised in the vehicle, wherein said message contains an instruction to unlock the vehicle.
